# EUROPEAN PATENT SPECIFICATION

(11) **EP 0 247 326 B1**
(45) Date of publication and mention of the grant of the patent: **08.06.1994**
(21) Application number: 87104668.6
(22) Date of filing: 30.03.1987
(51) Int. Cl.: C08L 23/08, C08L 31/04, C08L 29/04

(54) **Resin compositions, laminates and block copolymers as components thereof**
Harzzusammensetzungen, Verbundstoffe und Blockkopolymere als Komponente davon
Compositions de résine, laminés et copolymères séquencés comme composants de celles-ci

(30) Priority: 31.03.1986 JP 74934/86; 31.03.1986 JP 74935/86; 31.03.1986 JP 74936/86; 31.03.1986 JP 74937/86
(43) Date of publication of application: 02.12.1987
(73) Proprietor: KURARAY Co. LTD., Okayama 710 (JP)
(72) Inventor: Aoyama, Akimasa, Kurashiki-City (JP); Moritani, Takeshi, Kurashiki-City (JP); Yonezu, Kiyoshi, Kurashiki-City (JP); Okaya, Takuji, Nagaokakyo-City (JP)
(74) Representative: VOSSIUS & PARTNER

(56) References cited:
- FR-A- 2 279 771

## Description

The present invention relates to resin compositions and their use in the preparation of laminates, which are flexible and have excellent flexural fatigue resistance and gas barrier properties.

Saponified products of ethylene-vinyl acetate copolymers (hereafter referred to as EVOH) are widely known as melt-formable thermoplastic resins having excellent gas barrier properties, oil resistance, solvent resistance and flavor retention properties and have been used for films, sheets and containers, in various wrapping fields.

However, EVOH has the disadvantage of being rigid and fragile and lacks flexibility so that it is seldom used alone but mainly as a laminate with other thermoplastic resins. Nonetheless , cracks and pinholes are formed in an EVOH layer as a result of violent vibrations, for example, due to transportation and flexural fatigue and excellent gas barrier properties could not be retained. FR-A-2279771 describes moulded articles having improved shock resistance comprising a hydrolysed vinyl acetate/ethylene copolymer and 2 to 100 parts by weight per 100 parts by weight of the copolymer of an elastomeric polyether/polyester block copolymer.

The object of the present invention is to provide a resin composition having excellent flexural fatigue resistance and excellent gas barrier properties.

As a result of extensive investigations, the present inventors discovered that the object described above can be achieved by blending an EVOH-type copolymer containing a polyether component with ordinary EVOH and have thus come to the present invention.

The present invention is directed to a resin composition comprising 95 to 50 parts by weight of EVOH and 5 to 50 parts by weight of EVOH containing a polyether component.

The packaging materials composed of the resin composition according to the present invention have excellent gas barrier properties, oil resistance, solvent resistance and flavor retention properties and show greatly improved flexibility and flexural fatigue resistance. The aforesaid resin composition is extremely useful in various packaging fields not only as flexible laminate packaging material, but also as flexible single-layer packaging material.

The EVOH used in the present invention is a saponified ethylene-vinyl acetate copolymer having an ethylene content of 20 to 60 mol%, preferably 25 to 55 mol%, in which the vinyl acetate component has a saponification degree of at least 95%, preferably 98% or more. When the ethylene content is less than 20 mol%, not only the formability is affected but also the gas barrier properties under high humidity. When the ethylene content exceeds 60 mol%, the gas barrier properties are greatly reduced, which is not desirable. When the saponification degree of the vinyl acetate component is less than 95 %, the gas barrier properties are affected, which is not desirable. In addition, other copolymerizable unsaturated monomers may also be contained in amounts which do not damage the properties of EVOH.

The term "ethylene content of 20 to 60 mol%" in EVOH containing the polyether component indicates the content of ethylene present in EVOH from which the polyether component has been excluded. The ethylene content and the saponification degree of both EVOH containing the polyether component and EVOH blended therewith can be freely chosen in the ranges described above, but it is preferred that both the ethylene content and the saponification degree be equal or almost equal to each other. For example, the difference in the ethylene should be 20 mol% or less, preferably 10 mol% or less,and the difference in the saponification degree should be 3% or less, preferably 2% or less.

As the polyether component, mention may be made to a component mainly composed of oxyalkylene units such as oxyethylene units, oxypropylene units, oxyethylene-oxypropylene units or oxytetramethylene units. Among them, particularly preferred are the oxypropylene units and the oxyethylene-oxypropylene units. The polyether component may further contain polymethylene units, amide groups, urethane groups, ester groups or phenyl group.

As to the weight ratio of the EVOH component and the polyether component of the polyether component-containing EVOH copolymer of the present invention, it is preferred that the amount of the polyether component be at least 2 wt% for the purpose of imparting flexibility. In view of dispersibility upon blending with EVOH, of interaction therebetween or of gas barrier properties, the amount of the polyether component should be 90 wt% or less. The amount of the polyether component is at least 10 wt%, preferably 20 wt% or more and preferably not greater than 80 wt% when the polyether component-containing EVOH copolymer is blended with EVOH.

Processes for preparing the polyether component-containing EVOH copolymer of the present invention will be described below in detail.

A first type is a block copolymer composed of polyether and EVOH; when polyether and EVOH are expressed by P and E, respectively, the block copolymer is represented by P-E or E-P-E. Such a block copolymer can be prepared, for example, by a process which comprises copolymerizing vinyl acetate and ethylene in the presence of a polyether containing (a)mercapto group(s) at the end(s) thereof (one end or both ends),followed by saponification in a conventional manner, or by a process which comprises polymerizing a polyether containing (a) polymerizable double bond(s) in the presence of a ethylene-vinyl alcohol copolymer containing a mercapto group at one end thereof.

The polyether containing (a)polymerizable double bond(s) as used here includes:
a (meth)allyl ether type polyether represented by the general formula: 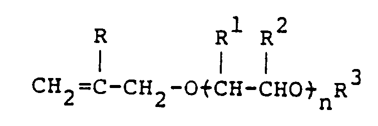
wherein R represents a hydrogen atom or a methyl group; R¹ and R² represent a hydrogen atom or an alkyl group having 1 to 10 carbon atoms; and R³ represents a hydrogen atom or an alkyl group having 1 to 10 carbon atoms, an alkyl ester group (having 1 to 10 carbon atoms in the alkyl group) or an alkylamide group (having 1 to 10 carbon atoms in the alkyl group), for example, polyoxyethylene (meth)allyl ether or polyoxypropylene (meth)allyl ether; n represents an integer of 1 to 100;
a (meth)allyl ether type polyether represented by the general formula: 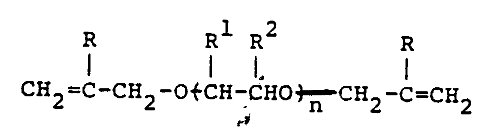
wherein R, R¹ and R² have the above meaning ;
a (meth)acrylamide type polyether having a double bond at one end thereof represented by the general formula: 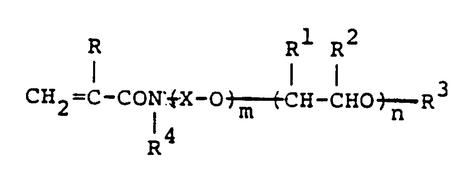
wherein R⁴ represents a hydrogen atom or an alkyl group having 1 to 10 carbon atoms or 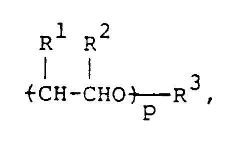
X represents an alkylene group,a substituted alkylene group, a phenylene group or a substituted phenylene group having 1 to 10 carbon atoms; m represents 0 or an integer of 1 to 20; n and p each represent an integer of 1 to 100 respectively; and R¹, R² and R³ have the above meaning; for
example, polyoxyethylene (meth)acrylamide or polyoxypropylene (meth)acrylamide;
a (meth)acrylic acid ester type polyether represented by the general formula: 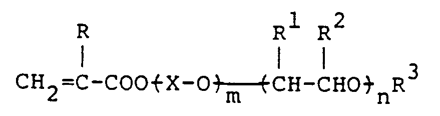
wherein R, R¹, R², R³, X, m and n have the above meaning,
for example, polyoxyethylene (meth)acrylate or polyoxypropylene (meth)acrylate; or,
a vinyl ether type polyether represented by the general formula: 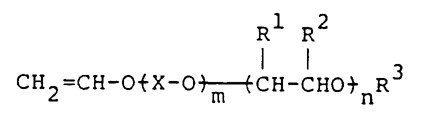
wherein R¹, R², R³, X, m and n have the above meaning,
for example, polyoxyethylene vinyl ether or polyoxypropylene vinyl ether.

The next type is a graft copolymer in which the polyether is added in a grafted form as a branch polymer to EVOH. Such a graft copolymer can be obtained, for example, by copolymerizing ethylene and vinyl acetate together with a polyether containing (a)polymerizable double bond(s) at the end(s) thereof followed by saponification in a conventional manner.

A third type is a graft copolymer in which EVOH is added in a grafted form as a branch polymer to the polyether. Such a graft copolymer can be obtained, for example, by copolymerizing ethylene and vinyl acetate in the presence of a polyether containing mercapto groups in the side chain thereof followed by saponification. The processes described above are representative examples,but the present invention is not deemed to be limited thereto.

The thus obtained polyether component-containing EVOH copolymer has a melt index (MI) of 0.1 to 250 g/10 min. The MI used here is a value determined in accordance with ASTM D-1238-65T (2160 g, 190 °C). The MI can be controlled by the degree of polymerization of the EVOH component, the degree of polymerization of the polyether component and the weight ratio of the EVOH component and the polyether component; in the case of blending said polyether component-containing EVOH with ordinary EVOH, however, the MI of said polyether component-containing EVOH can be chosen from a wide range.

The thus obtained polyether component-containing EVOH copolymer is blended with EVOH.The blending ratio varies depending upon the kind, weight ratio and addition mode of the polyether in the EVOH copolymer and further upon the desired efficiency. It is, however, generally preferred that the EVOH and the polyether component-containing EVOH copolymer be contained in 95 to 50 parts by weight and 5 to 50 parts by weight, respectively. It is preferred that the MI of the EVOH used here be 0.1 to 50 g/10 min, more preferably 0.1 to 30 g/10 min, most preferably 0.1 to 20 g/10 min. For blending, one can adopt known methods such as melt blending using a Banbury mixer, melt blending using a single-or twin- screw extruder.

Upon blending, other additives, for example, antioxidants, UV absorbants, lubricants, plasticizers, antistatic agents or coloring agents can be incorporated within such a range that does not inhibit the effect and function of the present invention.

The thus obtained resin composition of the present invention is readily formable by known melt forming methods and can be formed into optionally formed products such as films, sheets, cups, tubes or bottles. Further, should the resin composition be used in laminates with other thermoplastic resins, for example, polypropylene polyethylene, polyethylene terephthalate, polyamide or polystyrene, containing two or more layers, forming is effected by known methods such as multilayered co-extrusion, co-injection extrusion or coating. Further, if used in laminates containing three or more layers, it is preferred that the composition of the present invention be used as an intermediate layer.

Now, further embodiments of the present invention will be described.

As described hereinabove, in view of gas barrier properties it is preferred that a blend of EVOH and the polyether component-containing EVOH copolymer be used, as will be noted from Examples 1-1 to 1-15. In its use for producing a laminate structure, a laminate having excellent flexural fatigue resistance and good gas barrier properties can be obtained. It is furthermore free of cracks or drawing unevenness when thermo-formed (for example, in deep drawing, drawing, blowing). This is achieved by providing an EVOH layer containing the polyether component.

Laminates comprising a layer of a block copolymer which is the polyether component-containing EVOH copolymer, will be illustrated in Examples 2-1 to 2-6. In this case, the weight ratio of the EVOH component and the polyether component in the block copolymer is 50 to 98 wt% of the EVOH component to 2 to 50 wt% of the polyether component. In view of imparting flexibility thereto, the amount of the polyether component should be at least 2 wt%, preferably 5 wt% or more.On the other hand, the polyether component should be 50 wt% or less, preferably 30 wt% or less, in view of gas barrier properties. Further, the MI of this block copolymer is 0.1 to 50 g/10 min, preferably 0.3 to 25 g/10 min.

In this block copolymer, Young's modulus is reduced to 2/3 to 1/10 that of ordinary EVOH, which is flexible and melt formable as in ordinary EVOH. As the thermoplastic resins that can be used for laminating on this block copolymer, there are polypropylene, polyethylene (branched or linear), ethylene-propylene copolymer, ethylene-vinyl acetate copolymer, thermoplastic polyester, polyamide, polystyrene, polycarbonate and polyvinyl chloride; among them, particularly preferred are linear polyethylene, polypropylene, ethylene-propylene copolymer, thermoplastic polyester and polystyrene.

To make laminates, they can be formed into a multilayered structure of two or more layers; in the case of three or more layers, the block copolymer layer is often used as an intermediate layer.

The molding or forming methods used to obtain such laminates, are known methods such as co-extrusion, co-injection, extrusion lamination or coating. Particularly preferred is co-extrusion.

When preparing laminates, it is advantageous to insert an adhesive resin between respective layers. There is no particular limitation to the adhesive resin, but preferred examples include carboxyl-modified products of polyethylene, ethylene-vinyl acetate copolymer, polypropylene and ethylene-acrylic acid ester (methyl ester or ethyl ester) copolymer. A resin modified with maleic anhydride may be used as such or be blended with an unmodified polymer.

The thus formed laminates are extremely useful as flexible laminate packaging material because they exhibit excellent resistance to violent vibrations which occur during transportation, flexural fatigue, impact when dropped and fatigue caused by friction. This is the result of the improved flexibility of the block copolymer layer as compared to laminates obtained using conventional EVOH. These advantages become more apparent at low temperatures.

Laminates bearing a layer of either EVOH-type copolymer in which polyether is added in a grafted form as a branch polymer of EVOH,or of EVOH-type copolymer in which EVOH is added in a grafted form as a branch polymer of polyether (hereafter referred to as graft copolymers) will be described in Examples 3-1 to 3-5 and 3-6. With respect to the weight ratio of the EVOH component and the polyether component in the graft copolymer, the polyether component is 2 to 60 wt%; the polyether component is at least 2 wt%, preferably 5 wt% or more from a viewpoint of imparting flexibility. On the other hand, in view of gas barrier properties, the polyether component is at most 60 wt%, preferably 50 wt% or less. In this case the ethylene content is preferably 31 to 6o mol%.

In the graft copolymer, Young's modulus is reduced to 2/3 to 1/10 and impact strength becomes 2 to 50 times that of ordinary EVOH. The graft copolymer is flexible and excellent in impact resistance and is melt formable as ordinary EVOH. As thermoplastic resins used for laminating with the graft copolymer, there can be used those described above.

The laminates thus formed using the graft copolymer are extremely useful as flexible laminate packaging material because they are unaffected by violent vibrations ocurring during transportation, flexural fatigue, impact when dropped, fatigue caused by friction, etc. because of the improved flexibility of the EVOH layer, as compared to laminates obtained using conventional EVOH. Said properties can be observed even better at low temperatures.

Still another embodiment of the present invention will be described below.

The block copolymer comprised by the resin compositions according to the present invention in which the polyether component is a terminal group of the EVOH is novel.

As is also evident from the foregoing description, the block copolymer is melt formable, has good laminate formability with other thermoplastic resins and excellent flexibility, flexural fatigue resistance and gas barrier properties.

Therefore, it is extremely useful in resin compositions for preparing packaging material for different purposes especially as packaging materials for foodstuffs. The properties of the block copolymer are fully described in Examples 1-1 to 1-6 and 2-1 to 2-6 and are clear from the description.

### Examples 1-1 to 1-3

Into a reactor of a 1 liter volume equipped with a stirrer were charged 500 g of polyoxypropylene allyl ether (UNISAFE® PKA-5018, manufactured by Nippon Oils and Fats Co., Ltd.) having a molecular weight of 3000 and containing polymerizable double bonds at both ends and 4 mg of benzoyl peroxide. While stirring at room temperature, thioacetic acid was continuously added to the mixture at a rate of 13 g/hour for 3 hours. Then the unreacted thioacetic acid was removed from the reaction system at 30 to 45°C under reduced pressure. Next, 100 g of methanol and 1.1 g of sodium hydroxide were added to the system. After stirring at 60°C for 2 hours in a nitrogen flow, acetic acid was added to the system to neutralize an excess of sodium hydroxide. Titration of mercapto groups of the thus obtained mercapto-polyoxypropylene with I₂ showed 6.56 x 10⁻⁴ eq/g, wherein the two ends containing double bonds were almost quantitatively changed to mercapto groups.

Next, 14.5 kg of vinyl acetate and 31 g of mercapto-polyoxypropylene were charged into a polymerization tank of a 50 liter volume having a cooling coil inside, equipped with a stirrer. After the air in the polymerization tank was replaced with nitrogen, the temperature was raised to 60°C and ethylene was charged to render the pressure 42,1 bar (43 kg/cm²). Then, 14 g of polymerization initiator 2,2'-azobis-(2,4-dimethylvaleronitrile) was dissolved in 300 ml of methanol and the solution was added to the reaction system. Subsequently, mercapto-polyoxypropylene was added to the system at a rate of 440 g/hour for 4 hours to perform polymerization. The conversion of the vinyl acetate was 42%. Then, the copolymerization reaction solution was supplied to a stripping tower. After the unreacted vinyl acetate was removed from the top by feeding methanol from the bottom of the tower, saponification was performed using sodium hydroxide as a catalyst in a conventional manner. Then after thoroughly washing with acetone and then with water, the product was immersed in a diluted aqueous acetic acid solution and the system was dried at 60 to 105°C in a nitrogen flow. The thus obtained EVOH copolymer was a block copolymer wherein the EVOH was attached at both ends of the polyoxypropylene. The 500 MHZ¹H-NMR analysis, showed that the composition had an ethylene content of 30.8% and a polyoxypropylene content of 31 wt%. The saponification degree of the vinyl acetate component was - 99.1%. Further, the melt index (hereafter referred to as MI) measured at 190 °C under a load of 2160 g according to ASTM D-1238-65T was 120 g/10 min.

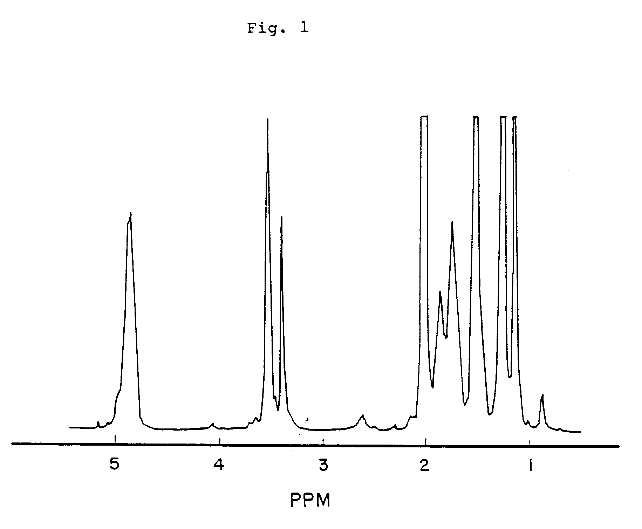

To confirm that the thus obtained EVOH copolymer is a block copolymer wherein EVOH is attached at both ends of polyoxypropylene, that is, EVOH-S-polyoxypropylene-S-EVOH, the EVOH block copolymer was reacetylated, and then examined at 500 MHZ ¹H-NMR. The NMR spectrum of the thus obtained reacetylated product is shown in Fig.1.

As the peak centered at 2.6 ppm is assigned to the methylene protons adjacent to sulfur, it is clear that this reacetylated product is a block copolymer wherein ethylene-vinyl acetate copolymer is attached at both ends of the polyoxypropylene. Therefore, it is also clear that the aforesaid EVOH copolymer is a block copolymer wherein the EVOH is attached at both ends of the polyoxypropylene.

Next, the block copolymer (copolymer A) and EVOH having an ethylene content of 32.1 mol%, a saponification degree of the vinyl acetate component of 99.5% and/MI of 0.61 g/10 min (EVOH No. 1) were blended in various proportions to give compositions. The compositions were extrusion molded to give films and, Young's modulus, the flexural fatigue resistance of the films and the amount of permeated oxygen were measured.

Using a film-forming machine equipped with an extruder and a T-die, extrusion molding was carried out at an extruder temperature of 180 to 220°C and a T-die temperature of 215°C to give films each having a thickness of 15 »m.

The Young's modulus was measured by an Autograph at an extension rate of 200%/min, according to ASTM D-638 using as specimens the films which had been moisture-controlled for 7 days at 20°C and 65% RH.

The test of flexural fatigue resistance was carried out using Gelbo Flex® Tester (manufactured by Rigaku Kogyo Co., Ltd.), on a specimen of 30,5 cm by 20,3 cm (12 in. by 8 in) made round into a cylinder having a diameter of 8,9 cm (3 1/2 in) in which both ends were held at an initial holding distance of 17,8 cm (7 in), a holding distance when flexed to the maximum of 2,5 cm (1 in). To the specimen were applied repeated reciprocating motions, one motion consisting of twisting at an angle of 440° in the first 8,9 cm (3 1/2 in) of the stroke, and at subsequent 6,4 cm (2 1/2 in) linear horizontal motion at a rate of 40 times/min under conditions of 20°C and 65% RH.

After moisture control for 7 days the amount of permeated gas was measured at 20 °C and 65% RH as well as 20°C and 85% RH, using OX-TRAN® 100 manufactured by Modern Control Co., Ltd. The specimens measured were those used for the test of flexural fatique resistance by changing the reciprocating motions various times.

The results of these measurements are shown in Tables 1-1 and 1-2.

### Comparative Examples 1-1 to 1-2

The evaluation was also carried out with specimens where instead of the resin compositions of Examples 1-1 to 1-3 the EVOH was used on its own in a conventional manner, i.e. the aforesaid EVOH having an ethylene content of 32.1 mol%, a saponification degree of 99.5% of the vinyl acetate component and an MI of 0.61 g/10 min (EVOH No. 1) (Comparative Example 1-1) and the aforesaid EVOH having an ethylene content of 31.5 mol% and a saponification degree of 99.6% of the vinyl acetate component (EVOH No. 2) (Comparative Example 1-2). The results are shown in Tables 1-1 and 1-2.

**Table 1-1**

| | Resin Composition Copolymer A/EVOH No. 1 | MI (g/10 min) | Young's Modulus (MPa) |
|---|---|---|---|
| Example 1-1 | 10/90 | 1.0 | 0,183 |
| Example 1-2 | 20/80 | 1.7 | 0,160 |
| Example 1-3 | 30/70 | 2.9 | 0,136 |
| Comparative Example 1-1 | EVOH No. 1 alone | 0.61 | 0,211 |
| Comparative Example 1-2 | EVOH No. 2 alone | 2.5 | 0,216 |

**Table 1-2**

| Number of Reciprocating Motion (time) | | | 0 | 50 | 100 | 200 |
|---|---|---|---|---|---|---|
| Example 1-1 | Number of Pinholes per 6.2 dm² (96 in²) | | 0 | 0 | 0 | 1 |
| | Amount of Permeated Oxygen (cm³ 20 »m/m².day.bar) | 20°C, 65% RH | 0.6 | 0.6 | 0.7 | ∞ |
| | | 20°C, 85% RH | 1.8 | 1.8 | 2.0 | ∞ |
| Example 1-2 | Number of Pinholes per 6.2 dm² (96 in²) | | 0 | 0 | 0 | 0 |
| | Amount of Permeated Oxygen (cm³ 20 »m/m².day.bar) | 20°C, 65% RH | 0.7 | 0.7 | 0.7 | 0.8 |
| | | 20°C, 85% RH | 2.2 | 2.2 | 2.3 | 2.3 |
| Example 1-3 | Number of Pinholes per 6.2 dm² (96 in²) | | 0 | 0 | 0 | 0 |
| | Amount of Permeated Oxygen (cm³ 20 »m/m².day.bar) | 20°C, 65% RH | 0.8 | 0.8 | 0.8 | 0.9 |
| | | 20°C, 85% RH | 2.7 | 2.7 | 2.7 | 2.8 |
| Comparative Example 1-1 | Number of Pinholes per 6.2 dm² (96 in²) | | 0 | 1 | 14 | 26 |
| | Amount of Permeated Oxygen (cm³ 20 »m/m².day.bar) | 20°C, 65% RH | 0.5 | ∞ | ∞ | ∞ |
| | | 20°C, 85% RH | 1.5 | ∞ | ∞ | ∞ |
| Comparative Example 1-2 | Number of Pinholes per 6.2 dm² (96 in²) | | 0 | 1 | 16 | 31 |
| | Amount of Permeated Oxygen (cm³ 20»m/m².day.bar) | 20°C, 65% RH | 0.5 | ∞ | ∞ | ∞ |
| | | 20°C, 85% RH | 1.4 | ∞ | ∞ | ∞ |
| Note: ∞ indicates that there are no oxygen barrier properties. | | | | | | |

### Examples 1-4 to 1-6

Into a polymerization tank as shown in Examples 1-1 to 1-3 were charged 25.0 kg of vinyl acetate and 3.9 g of thioacetic acid. After the air in the polymerization tank was replaced with nitrogen, the temperature was raised to 60°C and ethylene was charged to render the pressure 58,8 bar (60 kg/cm²). Then, 100 g of polymerization initiator 2,2'-azobis-isobutyronitrile was dissolved in 1 liter of methanol and the solution was added to the reaction system. Subsequently, a methanol solution of 11.7 g/l thioacetic acid was added to the system at a rate of 500 ml/hour for 8 hours to perform polymerization. The conversion of the vinyl acetate was 40%. Then, the copolymerization reaction solution was supplied to a stripping tower. After the unreacted vinyl acetate was removed from the top by feeding methanol from the bottom of the tower, saponification was performed using sodium hydroxide as a catalyst in a conventional manner. Then,after thoroughly washing with water and then with acetone, the product was dried at 40°C under reduced pressure.

Next, 6.0 kg of EVOH with mercapto groups at both ends obtained in the method described above, 2.5 kg of polyoxypropylene allyl ether (UNISAFE® PKA-5014, manufactured by Nippon Oils and Fats Co., Ltd.) having a molecular weight of 1500 and one terminal polymerizable double bond and 20 kg of dimethylsulfoxide were placed into the polymerization tank described above. After the air in the polymerization tank was replaced with nitrogen, the temperature was raised to 60°C to prepare a homogeneous solution. Then 500 ml of 100 g/l methanol solution of 2,2'-azobisisobutyronitrile was added to the system followed by reaction for 5 hours. Next, the reaction solution was added to 200 liters of acetone by small portions under stirring-to precipitate the EVOH copolymer. Then, after thoroughly washing with acetone, the product was immersed in a diluted aqueous acetic acid solution and the system was dried at 60 to 105°C in a nitrogen flow. The thus obtained EVOH copolymer was a block copolymer, wherein the polyoxypropylene is attached to one end of the EVOH. The NMR analysis showed that the composition had an ethylene content of 44.2 mol% and a polyoxypropylene content of 24 wt%. The saponification degree of the vinyl acetate component was 99.4%. Furthermore, the MI was 230 g/10 min.

Next, the copolymer (copolymer B) and EVOH having an ethylene content of 45.1 mol%, a saponification degree of the vinyl acetate component of 99.5% and an MI of 2.8 g/10 min. (EVOH No. 2) were blended in various proportions to give compositions. The compositions were extrusion molded in a manner similar to that of Examples 1-1 to 1-3 to give films and, the Young's modulus and flexural fatigue resistance of the films and the amount of permeated oxygen were measured. The results are shown in Tables 1-3 and 1-4.

### Comparative Examples 1-3 to 1-4

The evaluation was also carried out with specimens where in place of the resin compositions of Examples 1-4 to 1-6 the EVOH was used on its own, i.e. the aforesaid EVOH having an ethylene content of 45.1 mol%, a saponification degree of 99.5% of the vinyl acetate component and an MI of 2.8 g/10 min (EVOH No. 3) (Comparative Example 1-3) and the aforesaid EVOH having an ethylene content of 44.3 mol%, a saponification degree of 99.3% of the vinyl acetate component and an MI of 9.5 g/10 min (EVOH No. 4) (Comparative Example 1-4). The results are shown in Tables 1-3 and 1-4.

**Table 1-3**

| | Resin Composition Copolymer B/EVOH No. 2 | MI (g/10 min) | Young's Modulus (MPa) |
|---|---|---|---|
| Example 1-4 | 10/90 | 4.4 | 0,127 |
| Example 1-5 | 20/80 | 6.8 | 0,099 |
| Example 1-6 | 30/70 | 10.5 | 0,071 |
| Comparative Example 1-3 | EVOH No. 3 alone | 2.8 | 0,148 |
| Comparative Example 1-4 | EVOH No. 4 alone | 9.5 | 0,145 |

**Table 1-4**

| Number of Reciprocating Motion (time) | | | 0 | 70 | 150 | 250 |
|---|---|---|---|---|---|---|
| Example 1-4 | Number of Pinholes per 6.2 dm² (96 in²) | | 0 | 0 | 0 | 1 |
| | Amount of Permeated Oxygen (cm³ 20 »m/m².day.bar) | 20°C, 65% RH | 1.5 | 1.5 | 1.8 | ∞ |
| | | 20°C, 85% RH | 3.7 | 3.7 | 4.1 | ∞ |
| Example 1-5 | Number of Pinholes per 6.2 dm² (96 in²) | | 0 | 0 | 0 | 0 |
| | Amount of Permeated Oxygen (cm³ 20 »m/m².day.bar) | 20°C, 65% RH | 1.8 | 1.8 | 2.1 | 2.5 |
| | | 20°C, 85% RH | 4.4 | 4.5 | 4.8 | 5.4 |
| Example 1-6 | Number of Pinholes per 6.2 dm² (96 in²) | | 0 | 0 | 0 | 0 |
| | Amount of Permeated Oxygen (cm³ 20 »m/m².day.bar) | 20°C, 65% RH | 2.2 | 2.3 | 2.5 | 2.7 |
| | | 20°C, 85% RH | 5.4 | 5.6 | 5.8 | 6.1 |
| Comparative Example 1-3 | Number of Pinholes per 6.2 dm² (96 in²) | | 0 | 1 | 17 | 29 |
| | Amount of Permeated Oxygen (cm³ 20 »m/m².day.bar) | 20°C, 65% RH | 1.3 | ∞ | ∞ | ∞ |
| | | 20°C, 85% RH | 3.2 | ∞ | ∞ | ∞ |
| Comparative Example 1-4 | Number of Pinholes per 6.2 dm² (96 in²) | | 0 | 2 | 25 | 38 |
| | Amount of Permeated Oxygen (cm³ 20 »m/m².day.bar) | 20°C, 65% RH | 1.2 | ∞ | ∞ | ∞ |
| | | 20°C, 85% RH | 3.0 | ∞ | ∞ | ∞ |
| Note: ∞ indicates that there are no oxygen barrier properties. | | | | | | |

### Examples 1-7 to 1-9

Into a polymerization tank as shown in Examples 1-1 to 1-3 were charged a solution of 11.0 kg of vinyl acetate, 7.46 kg of polyoxypropylene allyl ether (UNISAFE® PKA-5018, manufactured by Nippon Oils and Fats Co., Ltd.) having a molecular weight of 3000 and containing polymerizable double bonds at both ends, 4.7 kg of methanol and 45 g of 2,2'-azobis-(2,4-dimethylvaleronitrile) dissolved in 500 ml of methanol. The ethylene pressure was rendered 36,3 bar (37 kg/cm²). Copolymerization was conducted at 60 °C for 6.8 hours. The conversion of the vinyl acetate was 40%. Then, the copolymerization reaction solution was supplied to a stripping tower. After the unreacted vinyl acetate was removed from the top by feeding methanol from the bottom of the tower, saponification was performed using sodium hydroxide as a catalyst in a conventional manner. After being thoroughly washed with acetone and then with water, the product was immersed in a diluted aqueous acetic acid solution and the system was dried at 60 to 105°C in a nitrogen flow. To the thus obtained EVOH copolymer, polyoxypropylene was added in a grafted form as a branch polymer of EVOH. The NMR analysis showed that the composition had an ethylene content of 37.6 mol% and a polyoxypropylene content of 49 wt%. The saponification degree of the vinyl acetate component was 99.4%. Further, the MI was 0.51 g/10 min.

Next, the copolymer (copolymer C) and EVOH having an ethylene content of 37.8 mol%, a saponification degree of the vinyl acetate component of 99.4% and an MI of 1.3 g/10 min (EVOH No. 5) were blended in various proportions to give compositions. The compositions were formed into films in a manner similar to that of Examples 1-1 to 1-3 to give films having a thickness of 15 »m. Young's modulus and the flexural fatigue resistance of the films and the amount of permeated oxygen were measured. The results are shown in Tables 1-5 and 1-6.

### Comparative Example 1-5

The evaluation was also carried out with specimens where in place of the resin compositions of Examples 1-7 to 1-9 the EVOH was used on its own, i.e. the aforesaid EVOH having an ethylene content of 37.8 mol%, a saponification degree of 99.4% of the vinyl acetate component and an MI of 1.3 g/10 min (EVOH No. 5). The results are shown in Tables 1-5 and 1-6.

**Table 1-5**

| | Resin Composition Copolymer C/EVOH No. 5 | MI (g/10 min) | Young's Modulus (MPa) |
|---|---|---|---|
| Example 1-7 | 10/90 | 1.2 | 0,143 |
| Example 1-8 | 20/80 | 1.1 | 0,121 |
| Example 1-9 | 30/70 | 1.0 | 0,097 |
| Comparative Example 1-5 | EVOH No. 5 alone | 1.3 | 0,180 |

**Table 1-6**

| Number of Reciprocating Motion (time) | | | 0 | 60 | 100 | 200 |
|---|---|---|---|---|---|---|
| Example 1-7 | Number of Pinholes per 6.2 dm² (96 in²) | | 0 | 0 | 0 | 1 |
| | Amount of Permeated Oxygen (cm³ 20 »m/m².day.bar) | 20°C, 65% RH | 1.0 | 1.0 | 1.3 | ∞ |
| | | 20°C, 85% RH | 3.0 | 3.0 | 3.5 | ∞ |
| Example 1-8 | Number of Pinholes per 6.2 dm² (96 in²) | | 0 | 0 | 0 | 0 |
| | Amount of Permeated Oxygen (cm³ 20 »m/m².day.bar) | 20°C, 65% RH | 1.2 | 1.2 | 1.3 | 1.5 |
| | | 20°C, 85% RH | 3.7 | 3.7 | 3,9 | 4.5 |
| Example 1-9 | Number of Pinholes per 6.2 dm² (96 in²) | | 0 | 0 | 0 | 0 |
| | Amount of Permeated Oxygen (cm³ 20 »m/m².day.bar) | 20°C, 65% RH | 1.5 | 1.5 | 1.7 | 2.0 |
| | | 20°C, 85% RH | 4.7 | 4.7 | 4,9 | 5.4 |
| Comparative Example 1-5 | Number of Pinholes per 6.2 dm² (96 in²) | | 0 | 1 | 21 | 29 |
| | Amount of Permeated Oxygen (cm³ 20 »m/m².day.bar) | 20°C, 65% RH | 0.8 | ∞ | ∞ | ∞ |
| | | 20°C, 85% RH | 2.5 | ∞ | ∞ | ∞ |
| Note: ∞ indicates that there are no oxygen barrier properties. | | | | | | |

### Examples 1-10 to 1-12

Into a reactor of 10 liter volume equipped with a stirrer were charged 4.5 kg of thoroughly dehydrated poly(oxyethyleneoxypropylene) (manufactured by Nippon Oils and Fats Co., Ltd., UNIRUB® DE-60) having a molecular weight of 3000, 480 g of methylenebis(4-phenylisocyanate), 64 g of thioglycerol and 36 g of acetic acid. The mixture was stirred at 80 °C for 3 hours to synthesize a polyether exhibiting mercapto groups in its side chain.

Next, 14.5 kg of vinyl acetate and 55 g of the aforesaid polyether containing thiol groups in its side chain were charged into a polymerization tank as shown in Examples 1-1 to 1-3. After the air in the polymerization tank was replaced with nitrogen, the temperature was raised to 60°C and ethylene was charged to render the pressure 42,1 bar (43 kg/cm²). Then, 14 g of the polymerization initiator 2,2'-azobis-(2,4-dimethylvaleronitrile) was added to the system; thereafter, the polyether containing thiol groups in its side chain was added at a rate of 404 g/hour for 5 hours to effect polymerization. The conversion of the vinyl acetate was 39 %. Then, the copolymerization reaction solution was supplied to a stripping tower. After removing the unreacted vinyl acetate from the top by feeding methanol from the bottom of the tower, saponification was performed using sodium hydroxide as a catalyst in a conventional manner. After being thoroughly washed with acetone and then with water, the product was immersed in a diluted aqueous acetic acid solution and the system was dried at 60 to 105°C in a nitrogen flow. In the thus obtained EVOH copolymer the EVOH was contained in grafted form as a branch polymer of polyether. The NMR analysis showed that the composition had an ethylene content of 31.8 mol% and a poly(oxyethylene-oxypropylene) content of 35 wt%. The saponification degree of the vinyl acetate component was 99.3%. Further, the MI was 170 g/10 min.

Next, the copolymer (copolymer D) and EVOH having an ethylene content of 32.1 mol%, a saponification degree of the vinyl acetate component of 99.5% and an MI of 0.61 g/10 min (EVOH No. 1) used in Examples 1-1 to 1-3 were blended in various proportions to give compositions. The compositions were extrusion molded in a manner similar to that of Examples 1-1 to 1-3 to give films having a thickness of 15 »m. Young's modulus and the flexural fatigue resistance of the fig and the amount of permeated oxygen were measured. The results are shown in Tables 1-7 and 1-8.

### Comparative Examples 1-6 to 1-7

The evaluation was also carried out with specimens where in place of the resin compositions of Examples 1-10 to 1-12 the EVOH was used on its own, i.e. the aforesaid EVOH having an ethylene content of 31.4 mol%, a saponification degree of 99.5% of the vinyl acetate component and an MI of 1.2 g/10 min (EVOH No. 6) (Comparative Example 1-6) and the aforesaid EVOH having an ethylene content of 32.3 mol%, a saponification degree of 99.6% of the vinyl acetate component and an MI of 3.5 g/10 min (EVOH No. 7) (Comparative Example 1-7). The results are shown in Tables 1-7 and 1-8.

**Table 1-7**

| | Resin Composition Copolymer D/EVOH No. 1 | MI (g/10 min) | Young's Modulus (MPa) |
|---|---|---|---|
| Example 1-10 | 10/90 | 1.1 | 0,175 |
| Example 1-11 | 20/80 | 1.9 | 0,147 |
| Example 1-12 | 30/70 | 3.3 | 0,124 |
| Comparative Example 1-6 | EVOH No. 6 alone | 1.2 | 0,208 |
| Comparative Example 1-7 | EVOH No. 7 alone | 3.5 | 0,214 |

**Table 1-8**

| Number of Reciprocating Motion (time) | | | 0 | 50 | 100 | 200 |
|---|---|---|---|---|---|---|
| Example 1-10 | Number of Pinholes per 6.2 dm² (96 in²) | | 0 | 0 | 0 | 2 |
| | Amount of Permeated Oxygen (cm³ 20 »m/m².day.bar) | 20°C, 65% RH | 0.6 | 0.7 | 0.9 | ∞ |
| | | 20°C, 85% RH | 1.8 | 1.9 | 2.2 | ∞ |
| Example 1-11 | Number of Pinholes per 6.2 dm² (96 in²) | | 0 | 0 | 0 | 0 |
| | Amount of Permeated Oxygen (cm³ 20 »m/m².day.bar) | 20°C, 65% RH | 0.7 | 0.7 | 0.8 | 1.1 |
| | | 20°C, 85% RH | 2.2 | 2.2 | 2.4 | 2.7 |
| Example 1-12 | Number of Pinholes per 6.2 dm² (96 in²) | | 0 | 0 | 0 | 0 |
| | Amount of Permeated Oxygen (cm³ 20 »m/m².day.bar) | 20°C, 65% RH | 0.9 | 0.9 | 1.1 | 1.2 |
| | | 20°C, 85% RH | 2.8 | 2.8 | 3.1 | 3.4 |
| Comparative Example 1-6 | Number of Pinholes per 6.2 dm² (96 in²) | | 0 | 1 | 10 | 22 |
| | Amount of Permeated Oxygen (cm³ 20 »m/m².day.bar) | 20°C, 65% RH | 0.5 | ∞ | ∞ | ∞ |
| | | 20°C, 85% RH | 1.5 | ∞ | ∞ | ∞ |
| Comparative Example 1-7 | Number of Pinholes per 6.2 dm² (96 in²) | | 0 | 2 | 17 | 29 |
| | Amount of Permeated Oxygen (cm³ 20 »m/m².day.bar) | 20°C, 65% RH | 0.5 | ∞ | ∞ | ∞ |
| | | 20°C, 85% RH | 1.4 | ∞ | ∞ | ∞ |
| Note: ∞ indicates that there are no oxygen barrier properties. | | | | | | |

### Example 1-13

A laminate film composed of 3 types of resins and 5 layers (inner layer/adhesive layer/intermediate layer/adhesive layer/outer layer) was prepared using Copolymer A shown in Examples 1-1- to 1-3.

The film-forming machine comprised an extruder for the inner and outer layers, an extruder for the intermediate layer, an extruder for the adhesive layer and a T-die for 5 layers. The molding temperatures of the extruder for the inner and outer layers were 160 to 220°C, of the extruder for the intermediate layer 180 to 220°C, of the extruder for the adhesive layers 120 to 220°C and the T-die 225°C, respectively. The intermediate layer was composed of a blend of 25 parts by weight of Copolymer A and 75 parts by weight of EVOH (EVOH No. 1), the inner and outer layers were composed of linear low density polyethylene contaning 3.3 mol% 1-octene as a copolymerizable component and showing a MI of 1.6 g/10 min and the adhesive layers were composed of a modified ethylene-vinyl acetate copolymer (MI of 2.0 g/10 min) having a vinyl acetate content of 33 wt% and a maleic anhydride modification degree of 1.5 wt%. A thickness analysis of the laminate film shared that the intermediate layer was 12 »m thick, the inner and outer layer were 30 »m each and the adhesive layers were 5 »m each.

The flexuaral fatigue resistance was tested and the permeated oxygen gas measured as in Examples 1-1 to 1-3. The results are shown in Table 1-9.

### Comparative Example 1-8

A laminate film was obtained in a manner similar to that of Example 1-13 except that EVOH No. 1 was used alone as intermediate layer in place of the blend of Copolymer A and EVOH No. 1. The flexural fatigue resistance of the laminate film was tested and the amount of permeated oxygen gas was measured. The results are shown in Table 1-9.

**Table 1-9**

| Number of Reciprocating Motion (time) | | | 0 | 1500 | 3000 | 4500 |
|---|---|---|---|---|---|---|
| Example 1-13 | Number of Pinholes per 6.2 dm² (96 in²) | | 0 | 0 | 0 | 0 |
| | Amount of Permeated Oxygen (cm³ /m².day.bar) | 20°C, 65% RH | 1.0 | 1.0 | 1.2 | 1.5 |
| | | 20°C, 85% RH | 3.3 | 3.3 | 3.5 | 3,9 |
| Comparative Example 1-8 | Number of Pinholes per 6.2 dm² (96 in²) | | 0 | 0 | 3 | 7 |
| | Amount of Permeated Oxygen (cm³ /m².day.bar) | 20°C, 65% RH | 0.6 | 0.8 | ∞ | ∞ |
| | | 20°C, 85% RH | 2.3 | 2.7 | ∞ | ∞ |
| Note: ∞ indicates that there are are no oxygen barrier properties. | | | | | | |

### Example 1-14

A laminate film was obtained in a manner similar to that of Example 1-13 except that the blend of 25 parts by weight of Copolymer C shown in Examples 1-7 to 1-9 and 75 parts by weight of EVOH (EVOH No. 5) shown in Comparative Example 1-6 was used as intermediate layer in place of the blend of Copolymer A and EVOH No. 1. The flexural fatigue resistance of the laminate film was tested and the amount of permeated oxygen gas was measured.

The results are shown in Table 1-10.

### Comparative Example 1-9

A laminate film was obtained in a manner similar to that of Example 1-14 except that EVOH No. 5 was used alone as intermediate layer in place of the blend of Copolymer C and EVOH No. 5. The flexural fatigue resistance of the laminate film was tested and the amount of permeated oxygen gas was measured. The results are shown in Table 1-10.

**Table 1-10**

| Number of Reciprocating Motion (time) | | | 0 | 1500 | 3000 | 4500 |
|---|---|---|---|---|---|---|
| Example 1-14 | Number of Pinholes per 6.2 dm² (96 in²) | | 0 | 0 | 0 | 0 |
| | Amount of Permeated Oxygen (cm³ /m².day.bar) | 20°C, 65% RH | 1.5 | 1.5 | 1.8 | 2.3 |
| | | 20°C, 85% RH | 4,9 | 5,0 | 5.3 | 5,9 |
| Comparative Example 1-9 | Number of Pinholes per 6.2 dm² (96 in²) | | 0 | 0 | 3 | 7 |
| | Amount of Permeated Oxygen (cm³ /m².day.bar) | 20°C, 65% RH | 0.9 | 1.2 | ∞ | ∞ |
| | | 20°C, 85% RH | 3.4 | 4.1 | ∞ | ∞ |
| Note: ∞ indicates that there are no oxygen barrier properties. | | | | | | |

### Example 1-15

A laminate film was obtained in a manner similar to that of Example 1-13 except that the blend of 25 parts by weight of Copolymer D shown in Examples 1-7 to 1-9 and 75 parts by weight of EVOH (EVOH No. 6) shown in Examples 1-10 to 1-12 was used as intermediate layer in place of the blend of Copolymer A and EVOH No. 1. The flexural fatigue resistance of the laminate film was tested and the amount of permeated oxygen gas was measured. The results are shown in Table 1-11.

### Comparative Example 1-10

A laminate film was obtained in a manner similar to that of Example 1-15 except that EVOH No. 6 was used alone as intermediate layer in place of the blend of Copolymer D and EVOH No. 6. The flexural fatigue resistance of the laminate film was tested and the amount of permeated oxygen gas was measured. The results are shown in Table 1-11.

**Table 1-11**

| Number of Reciprocating Motion (time) | | | 0 | 1500 | 3000 | 4500 |
|---|---|---|---|---|---|---|
| Example 1-15 | Number of Pinholes per 6.2 dm² (96 in²) | | 0 | 0 | 0 | 0 |
| | Amount of Permeated Oxygen (cm³ /m².day.bar) | 20°C, 65% RH | 1.1 | 1.2 | 1.2 | 1.7 |
| | | 20°C, 85% RH | 3.4 | 3.5 | 3.6 | 4.1 |
| Comparative Example 1-10 | Number of Pinholes per 6.2 dm² (96 in²) | | 0 | 0 | 3 | 7 |
| | Amount of Permeated Oxygen (cm³/m².day.bar) | 20°C, 65% RH | 0.6 | 0.9 | ∞ | ∞ |
| | | 20°C, 85% RH | 2.2 | 2.7 | ∞ | ∞ |
| Note: ∞ indicates that there are no oxygen barrier properties. | | | | | | |

## Claims

1. A resin composition comprising 95 to 50 parts by weight of a saponified ethylene-vinyl acetate copolymer and 5 to 50 parts by weight of a saponified ethylene-vinyl acetate copolymer containing a polyether component.

2. A resin composition as claimed in claim 1 wherein said saponified ethylene-vinyl acetate copolymer containing a polyether component is a block copolymer of the polyether component and the saponified ethylene-vinyl acetate copolymer component.

3. A resin composition as claimed in claim 1 wherein said saponified ethylene-vinyl acetate copolymer containing a polyether component has the polyether component attached as a branch polymer to the saponified ethylene-vinyl acetate copolymer in a grafted form.

4. A resin composition as claimed in claim 1 wherein said saponified ethylene-vinyl acetate copolymer containing a polyether component has the saponified ethylene-vinyl acetate copolymer component attached as a branch polymer to the polyether component in a grafted form.

5. A resin composition as claimed in claim 1 wherein said polyether component comprises oxypropylene units.

6. A laminate having excellent gas barrier properties comprising at least two layers of a resin composition comprising 95 to 50 parts by weight of a saponified ethylene-vinyl acetate copolymer and 5 to 50 parts by weight of a saponified ethylene-vinyl acetate copolymer containing a polyether component and a layer of another thermoplastic resin.

## Patentansprüche

1. Harzzusammensetzung, umfassend 95 bis 50 Gew.-Teile eines verseiften Ethylen-Vinylacetat-Copolymers und 5 bis 50 Gew.-Teile eines eine Polyetherkomponente enthaltenden verseiften Ethylen-Vinylacetat-Copolymers.

2. Harzzusammensetzung nach Anspruch 1, wobei das eine Polyetherkomponente enthaltende verseifte Ethylen-Vinylacetat-Copolymer ein Blockcopolymer aus der Polyetherkomponente und der verseiften Ethylen-Vinylacetat-Copolymerkomponente ist.

3. Harzzusammensetzung nach Anspruch 1, wobei das eine Polyetherkomponente enthaltende verseifte Ethylen-Vinylacetat-Copolymer die Polyetherkomponente in gepfropfter Form als Seitenpolymer am verseiften Ethylen-Vinylacetat-Copolymer gebunden aufweist.

4. Harzzusammensetzung nach Anspruch 1, wobei das eine Polyetherkomponente enthaltende verseifte Ethylen-Vinylacetat-Copolymer die verseifte Ethylen-Vinylacetat-Copolymerkomponente in gepfropfter Form als Seitenpolymer an der Polyetherkomponente angefügt aufweist.

5. Harzzusammensetzung nach Anspruch 1, wobei die Polyetherkomponente Oxypropyleneinheiten umfaßt.

6. Laminat mit ausgezeichneten Gasbarriereeigenschaften umfassend mindestens zwei Schichten einer Harzzusammensetzung, die 95 bis 50 Gew.-Teile eines verseiften Ethylen-Vinylacetat-Copolymers und 5 bis 50 Gew.-Teile eines eine Polyetherkomponente enthaltenden verseiften Ethylen-Vinylacetat-Copolymers umfaßt, und eine Schicht eines anderen thermoplastischen Harzes.

## Revendications

1. Une composition de résine comprenant 95 à 50 parts en poids d'un copolymère saponifié éthylène - acétate vinylique et 5 à 50 parts en poids d'un copolymère saponifié éthylène - acétate vinylique contenant une composante polyéther.

2. Une composition de résine selon la revendication 1 dans laquelle ledit copolymère saponifié éthylène - acétate vinylique contenant une composante polyéther est un copolymère séquencé de la composante polyéther et de la composante copolymère saponifiée éthylène - acétate vinylique.

3. Une composition de résine selon la revendication 1 dans laquelle ledit copolymère saponifié éthylène - acétate vinylique contenant une composante polyéther a la composante polyéther liée comme polymère ramifié au copolymère saponifié éthylène - acétate vinylique sous forme greffée.

4. Une composition de résine selon la revendication 1 dans laquelle ledit copolymère saponifié éthylène - acétate vinylique contenant une composante polyéther a la composante copolymère saponifié éthylène - acétate vinylique liée comme polymère ramifié à la composante polyéther sous forme greffée.

5. Une composition de résine selon la revendication 1 dans laquelle ladite composante polyéther comprend des unités oxypropylène.

6. Un stratifié possédant d'excellentes propriétés de protection contre les gaz comprenant au moins deux couches d'une composition de résine contenant 95 à 50 parts en poids d'un copolymère saponifié éthylène - acétate vinylique et 5 à 50 parts en poids d'un copolymère saponifié éthylène - acétate vinylique contenant une composante polyéther et une couche d'une autre résine thermoplastique.
